# EUROPEAN PATENT SPECIFICATION

(11) **EP 4 324 588 B1**
(45) Date of publication and mention of the grant of the patent: **25.11.2026**
(21) Application number: 22846118.2
(22) Date of filing: 12.07.2022
(51) Int. Cl.: B23K 26/36, B23K 26/08, B23K 26/40, B23K 37/04, B23K 101/36, B23Q 11/00, H01M 4/04

(54) **ELECTRODE SHEET NOTCHING APPARATUS AND NOTCHING METHOD**
ELEKTRODENBLECHKERBUNGSVORRICHTUNG UND KERBVERFAHREN
APPAREIL D'ENTAILLAGE DE FEUILLES D'ÉLECTRODES ET PROCÉDÉ D'ENTAILLAGE

(30) Priority: 23.07.2021 KR 20210096910
(43) Date of publication of application: 21.02.2024
(73) Proprietor: LG Energy Solution, Ltd., Seoul 07335 (KR)
(72) Inventor: PARK, Dong Hyeuk, Daejeon 34122 (KR); LEE, Hyuk Soo, Daejeon 34122 (KR); KIM, Tae Su, Daejeon 34122 (KR); JO, Sungjun, Daejeon 34122 (KR); PARK, Jung Hyun, Daejeon 34122 (KR)
(74) Representative: Plasseraud IP
(86) International application number: PCT/KR2022/010136
(87) International publication number: WO 2023/003248

(56) References cited:
- EP-B1- 3 576 204
- JP-A- 2018 041 625
- JP-A- 2018 067 421
- JP-A- 2018 073 659
- KR-A- 20180 004 582
- KR-A- 20210 001 077
- KR-B1- 101 761 973
- KR-B1- 102 158 708

## Description

### [Technical Field]

The present application claims the benefit of priority based on Korean Patent Application No. 10-2021-0096910 filed on July 23, 2021.

The present invention relates to an electrode sheet notching apparatus and notching method.

### [Background Art]

As technology development and demand for mobile devices increase, rechargeable secondary batteries are widely used as energy sources for various mobile devices. In addition, the secondary battery is also attracting attention as an energy source for electric vehicles, hybrid vehicles, etc., which is being proposed as a way to solve the air pollution of existing gasoline or diesel vehicles.

The secondary battery is classified into a coin-type battery, a cylindrical battery, a prismatic battery, and a pouch-type battery depending on the shape of the battery case in which the electrode assembly is embedded. In general, an electrode assembly embedded in a battery case is classified into a jelly-roll type wound with a separator interposed between a positive electrode and a negative electrode, a stack type in which a plurality of unit cells with a separator interposed between a positive electrode and a negative electrode are stacked, and a stack/folding type in which unit cells are wound with a separation film.

Such a secondary battery may be manufactured by processing an electrode sheet in which an electrode mixture comprising an electrode active material, a conductive agent, and a binder is applied on an electrode current collector, to obtain an electrode, and stacking the prepared electrode together with a separator, and then embedding and sealing them in a battery case together with an electrolyte solution.

In this case, the electrode may be manufactured by notching an electrode sheet prepared by coating an electrode active material on an electrode current collector having the shape of a long sheet, and then, cutting it to a desired length.

Meanwhile, there is a case where the notching is performed by supporting the electrode sheet by a jig of a drum-shaped pattern having a hole for laser processing and irradiating a laser beam to the electrode sheet. However, in the case of notching the electrode sheet with a laser, foreign substances such as fume and spatter are accumulated on the pattern jig, which not only requires periodic cleaning of the jig, but also may cause loss due to non-operation of equipment due to replacement of the jig. In addition, there may be a problem in that defects occur due to damage to the surface of the electrode sheet due to foreign substances.

### [Prior Art Document]

### [Patent Document]

(Patent Document 1) Korean Laid-open Patent Publication No. 10-2021-0001077 (January 6, 2021) (Patent Document 2) Korean Patent No. 2158708 (September 16, 2020)

JP 2018041625 A discloses an electrode manufacturing device. KR 2021 0001077 A discloses laser notching with improved processing speed. KR 10 2058708 B1 discloses drum type pattern jig for laser notching processing of electrode film.

### [Disclosure]

### [Technical Problem]

It is an object of the present disclosure to provide an electrode sheet notching apparatus and notching method capable of minimizing the accumulation of foreign substances that occur during notching.

In addition, it is an object of the present disclosure to provide an electrode sheet notching apparatus and notching method capable of improving the problem of losses caused by non-operation of the equipment due to replacement of jig.

In addition, it is an object of the present disclosure to provide an electrode sheet notching apparatus and notching method capable of improving the problem of defects occurring due to damage to the surface of the electrode sheet due to foreign substances.

In addition, it is an object of the present disclosure to provide an electrode sheet notching apparatus and notching method capable of increasing the stability of notching by adjusting the tension for each region of the electrode sheet.

In addition, it is an object of the present disclosure to provide an electrode sheet notching apparatus and notching method capable of providing a stable discharge of scrap.

### [Technical Solution]

According to one embodiment of the present invention, the above problem can be solved by providing a jig having a first roller, a second roller and a slit which are distinct from each other, instead of the drum-shaped pattern jig having a hole for laser processing, which is the configuration mentioned in the technology that is the background section of the disclosure.

For example, one embodiment of the present invention comprises an electrode sheet notching apparatus comprising a conveying unit comprising a first roller and a second roller for conveying the electrode sheet; a jig unit comprising a jig for supporting the electrode sheet; and a processing unit comprising a laser for processing the electrode sheet, wherein the jig has a slit formed on a surface facing the electrode sheet, and moves on a plane coplanar with one surface of the electrode sheet so that a laser beam, which processed the electrode sheet, passes through the slit.

As another example, another embodiment of the present invention provides an electrode sheet notching method comprising the steps of rotating the first roller and the second roller to convey the electrode sheet; moving a jig having a slit formed on a surface facing the electrode sheet on a plane coplanar with one surface of the electrode sheet, so that the scheduled region of the electrode sheet to be processed and the slit overlap; and processing the electrode sheet by a laser.

### [Advantageous Effects]

In one aspect, the present invention can minimize the accumulation of foreign substances that occur during notching.

In another aspect, the present invention can improve the loss caused by the non-operation of the equipment due to the replacement of the jig.

In yet another aspect, the present invention can improve the problem of defects occurring due to damage to the surface of the electrode sheet due to foreign substances.

In one aspect, the present invention can increase the stability of notching by adjusting the tension for each region of the electrode sheet.

In another aspect, the present invention can provide a stable discharge of scrap.

### [Description of Drawings]

FIG. 1 is a side view of an electrode sheet notching apparatus according to one embodiment of the present invention.
FIG. 2 is a perspective view of an electrode sheet notching apparatus according to one embodiment of the present invention.
FIG. 3 is a perspective view of an electrode sheet notching apparatus according to one embodiment of the present invention.

### [Detailed Description]

Hereinafter, embodiments of the present invention will be described in detail with reference to the accompanying drawings. In addition, in the accompanying drawings to help the understanding of the invention, the configuration may be shown exaggerated to some extent, and some configurations may be omitted.

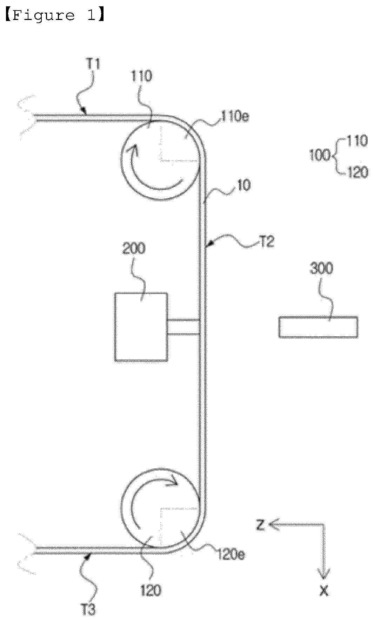

FIG. 1 is a side view of an electrode sheet notching apparatus according to one embodiment of the present invention.

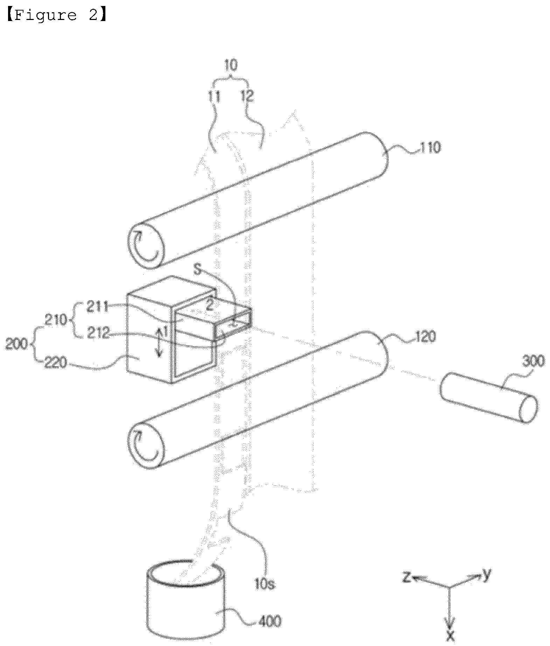

FIG. 2 is a perspective view of an electrode sheet notching apparatus according to one embodiment of the present invention.

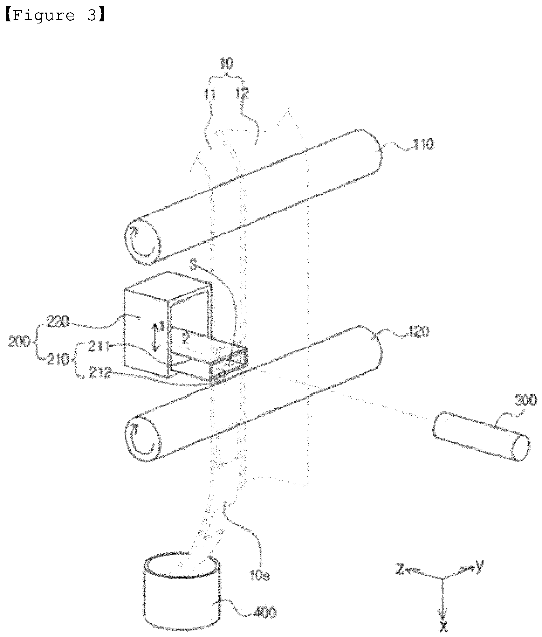

FIG. 3 is a perspective view of an electrode sheet notching apparatus according to one embodiment of the present invention.

For convenience of description, x direction may be referred to as a length direction, y direction may be referred to as a width direction, and z direction may be referred to as the thickness direction based on the drawings. From a similar point of view, the length in the x direction may be referred to as length, the length in the y direction may be referred to as width, and the length in the z direction may be referred to as a thickness.

Referring to the drawings, the electrode sheet notching apparatus according to one embodiment of the present invention comprises a conveying unit 100 including a first roller 110 and a second roller 120 for conveying an electrode sheet 10; a jig unit 200 disposed on one surface of the electrode sheet 10 and including a jig 210 for supporting the electrode sheet 10; and a processing unit 300 comprising a laser for processing the electrode sheet 10.

In addition, the electrode sheet notching apparatus according to one embodiment of the present invention may further comprise a retrieve unit 400 for retrieving scrap 10s generated when processing the electrode sheet 10.

The electrode sheet 10 may include an electrode current collector layer 11 and an electrode active material layer 12 disposed on the electrode current collector layer 11. However, the structure of the electrode sheet 10 is not limited to the structure shown in the drawings, and for example, may also be a structure in which the electrode active material layer 12 is disposed on both surfaces of the electrode current collector layer 11.

The electrode active material layer 12 may not be disposed on at least some regions of one end of the current collector layer 11, and the electrode sheet 10 may have this region as a non-holding part. An electrode tab may be processed by notching one end region of the electrode current collector layer 11 of the non-holding part. In this case, a part of the electrode active material layer 12 may be notched together with the electrode current collector layer 11.

The scrap 10s is a region that is separated from the rest of the electrode sheet 10 and retrieved separately as the electrode sheet 10 is processed during notching, and it does not exist in the structure of the final electrode. As described above, the electrode tab may be processed by notching a non-holding part on which the electrode active material layer 12 is not disposed, and thus the scrap 10s may be a partial region of the electrode current collector layer 11. However, since a portion of the electrode active material layer 12 may be notched together with the electrode current collector layer 11, the scrap 10s may also include the electrode active material layer 12.

The conveying unit 100 includes the first roller 110 and the second roller 120 for conveying the electrode sheet 10. Each of the first roller 110 and the second roller 120 conveys the electrode sheet 10 from the first roller 110 to the second roller 120 by rotating in one direction, and conveys the electrode sheet 10 in the x direction based on the drawings.

Each of the first roller 110 and the second roller 120 can be individually designed and controlled. For example, the speed of each of the first roller 110 and the second roller 120 can be controlled individually, and thus the first roller 110 and the second roller 120 may rotate at the same speed in one direction, or may rotate at different speeds. In this way, by individually controlling the rotation speed of the first roller 110 and the second roller 120, each of the tension T1 acting on the electrode sheet 10, the tension T2 acting on the electrode sheet 10 in the region between the first roller 110 and the second roller 120, and the tension T3 acting on the electrode sheet 10 in the region before reaching the second roller 120 can be individually adjusted. For example, when increasing the speed of the first roller 110, among the first roller 110 and the second roller 120 rotating at the same speed, and then decreasing the speed of the first roller 110 to the original speed, the tension T2 acting on the electrode sheet 10 in the region between the first roller 110 and the second roller 120 will be weakened. Similarly, when increasing the speed of the second roller 120, among the first roller 110 and the second roller 120 rotating at the same speed, and then decreasing the speed of the second roller 120 to the original speed, the tension T2 acting on the electrode sheet 10 in the region between the first roller 110 and the second roller 120 will become stronger. As described above, by individually controlling the tensions T1, T2, and T3 acting on each region of the electrode sheet 10, the stability of notching can be improved.

Meanwhile, each of the first roller 110 and the second roller 120 is a suction roller for suctioning the electrode sheet 10. Accordingly, each of the first roller 110 and the second roller 120 may contact and convey the electrode sheet 10. In addition, the second roller 120 may contact and convey the the scrap 10s generated during processing the electrode sheet 10, thereby stably discharging to the retrieve unit 400. At this time, each of the first roller 110 and the second roller 120 may suction the electrode sheet with the same suction force, or may suction the electrode sheet 10 with different suction forces.

Each of the first roller 110 and the second roller 120 suctions the electrode sheet 10 using a vacuum. The suction roller is implemented to suction the electrode sheet 10 through a vacuum hole formed on the surface of the roller and a vacuum pipe (not shown) connected to the vacuum hole. In this case, the first roller 110 and the second roller 120 may have regions 110e and 120e in contact with the electrode sheet 10 as suction effective regions. However, the shapes of the first roller 110 and the second roller 120 are not limited to the above-described shapes, and the first roller 110 and the second roller 120 may be implemented in various forms to suction the electrode sheet 10.

The jig unit 200 includes a jig 210 and comprises a jig base 220 for fixing and supporting the jig 210.

The jig 210 is disposed between the first roller 110 and the second roller 120. Specifically, the jig 210 may be disposed on one surface of the electrode sheet 10 in a region between the first roller 110 and the second roller 120 to support the electrode sheet 10. The jig 210 supports the region of the electrode sheet 10 processed by the laser, thereby not only preventing vibration of the electrode sheet 10 during notching, but also increasing the accuracy of the notching position.

The jig 210 has a slit (S) formed on a surface facing the electrode sheet 10. The slit (S) may pass through the jig 210 from the side facing the electrode sheet 10 of the jig 210 toward the opposite side of the side facing the electrode sheet 10. According to one embodiment of the present invention, it is possible to provide a jig suitable for laser processing of the electrode sheet 10 while having a simple shape, through the jig 210 in which the slit (S) is formed.

In order to prevent the burning phenomenon during laser processing, the jig 210 moves so that the laser beam processed by the electrode sheet 10 passes through the slit (S). In other words, the slit (S) moves to overlap at least a portion of the region to which the laser beam of the electrode sheet 10 is irradiated. At this time, the jig 210 moves on a plane coplanar with one surface of the electrode sheet 10. Based on the drawing, the jig 210 moves on the xy plane. As such, the jig 210 according to one embodiment of the present invention may be implemented to move through a plane motion rather than a rotational motion, unlike the drum-shaped pattern jig.

More specifically, the jig 210 may move in a direction 1 parallel to the conveying direction of the electrode sheet 10. The direction 1 parallel to the conveying direction of the electrode sheet 10 comprises both a forward direction that is the same as the conveying direction of the electrode sheet 10 and a backward direction that is opposite to the conveying direction of the electrode sheet 10. Based on the drawing, the jig 210 may move in the x direction and in the opposite direction thereof on the xy plane.

FIG. 2 shows a state in which the jig 210 has moved as much as possible in the opposite direction of the x direction, and FIG. 3 shows a state in which the jig 210 has moved to the maximum in the x direction. Although not shown in the drawings, the jig 210 may be located between the position shown in FIG. 2 and the position shown in FIG. 3.

Meanwhile, the jig 210 may not move in a direction perpendicular to the conveying direction of the electrode sheet 10 on the plane. Based on the drawing, the jig 210 may not move in the y direction and the opposite direction thereof on the xy plane. In this case, the width of the jig 210 may be the same as the width of the region of the electrode sheet 10 processed by the laser, or may be wider than the width of the region of the electrode sheet 10 processed by the laser. The width of the jig 210 is not particularly limited, but may be in the range of 15 to 35 mm. The length of the jig 210 is also not particularly limited, but may be in the range of 2 to 5 mm. The width of the jig 210 may mean a distance between regions located at the outermost sides in the width direction. The length of the jig 210 may mean a distance between regions located at the outermost sides in the longitudinal direction. Alternatively, the width of the slit (S) may be the same as a width of the region of the electrode sheet 10 processed by the laser, or may be wider than a width of the region of the electrode sheet 10 processed by the laser. Through such a structure, it is possible to simplify the movement direction of the jig 210 during notching.

However, the present invention is not limited thereto, and in an embodiment, the jig 210 may also move in a direction perpendicular to the conveying direction of the electrode sheet 10 on the plane depending on the design. Based on the drawing, the jig 210 can also move in the y direction and the opposite direction thereof. In addition, the jig 210 may move without limitation in the direction on the plane. Based on the drawing, the jig 210 can freely move without limitation in direction on the xy plane.

Meanwhile, the jig 210 may comprise a support portion 211 in contact with the electrode sheet 10 and a suction portion 212 for suctioning a foreign substance generated when the electrode sheet 10 is processed. At this time, the suction unit 212 may suction the foreign substances through the slit (S). When the suction portion 212 suctions foreign substances, the electrode sheet 10 is fixed by the support portion 211 to prevent the electrode sheet 10 from shaking.

The electrode sheet notching apparatus according to one embodiment of the present invention can minimize the accumulation of foreign substances by directly suctioning foreign substances generated during notching through the slit (S). Therefore, it is possible to improve the loss caused by the non-operation of the equipment due to the replacement of the jig and the problem of defects occurring due to damage to the surface of the electrode sheet due to foreign substances.

Meanwhile, the suction portion 212 may suction foreign substances using a vacuum. For example, the suction portion may be implemented to suction foreign substances through a vacuum pipe (not shown) connected to the slit (S), but the present invention is not limited thereto.

The suction direction 2 of the suction portion 212 is not particularly limited, but may be a direction perpendicular to the electrode sheet 10. Based on the drawing, the suction direction 2 of the suction portion 212 may be in the z direction. Alternatively, the suction direction 2 of the suction portion 212 may be in a direction between the x-direction and the z-direction or between the y-direction and the z-direction.

The jig 210 may be an operational jig moved by a motor. Accordingly, the jig 210 may be moved by being supplied with power by a motor connected to the jig 210.

Meanwhile, in order to precisely control the movement of the jig 210 in accordance with the region to which the laser beam is irradiated, there may be a controller for controlling the movement of the jig 210. For example, the controller may recognize the position information to be irradiated with the laser beam and transmit the recognized position information to the jig 210 to precisely control the movement of the jig 210.

The jig base 220 may fix and support the jig 210. Also, the jig base 220 may play a role of guiding the jig 210 to move along a movement path. In addition, the jig base may serve as a passage for discharging foreign substances suctioned through the suction portion 212 of the jig 210 to the outside of the jig unit 200.

The processing unit 300 is disposed on the other surface, which is the opposite surface of the one surface of the electrode sheet 10, and thus may face the jig unit 200 with the electrode sheet 10 interposed therebetween.

The processing unit 300 comprises a laser, and irradiates a laser beam on the electrode sheet 10 to perform notching. The processing pattern of the laser beam is not particularly limited, but roughly represents a pattern in the shape of a ribbon or bow tie and may perform processing of the electrode sheet 10.

The retrieve unit 400 may recover the scrap 10s generated when the electrode sheet 10 is processed. When the electrode sheet 10 is conveyed in the direction of the second roller 120 from the first roller 110, the second roller 120 may convey the scrap 10s to the retrieve unit 400. Accordingly, the scrap 10s may be transferred to the retrieve unit 400 via the second roller 120.

As a non-limiting example, the retrieve unit 400 may be in the form of a housing for recovering the falling scrap 10s through an open region. Alternatively, the retrieve unit 400 may be in the form of a roller for recovering the scrap 10s by winding the scrap 10s. However, the implementation method of the retrieve unit 400 is not limited to the above-described example, and the retrieve unit 400 may be implemented in various forms to recover the scrap 10s.

Meanwhile, the retrieve unit 400 may suction the scrap 10s by using a vacuum. When the retrieve unit 400 is in the form of a housing, the scrap 10s may be suctioned through a vacuum pipe in the housing. When the retrieve unit 400 is in the form of a roller, the scrap 10s may also be recovered by winding while suctioning the scrap 10s through a vacuum hole formed on the surface of the roller and a vacuum pipe connected to the vacuum hole.

The electrode sheet notching method according to one embodiment of the present invention may comprise the steps of rotating the first roller 110 and the second roller 120 to convey the electrode sheet 10; moving a jig 210 having a slit (S) formed on a surface facing the electrode sheet 10 on a plane coplanar with one surface of the electrode sheet, so that the scheduled region of the electrode sheet to be processed and the slit (S) overlap; and processing the electrode sheet 10 by a laser.

In addition, the electrode sheet notching method according to one embodiment of the present invention may further comprise a step of suctioning the foreign substances, which are generated when processing the electrode sheet 10, through the slit (S) of the jig 210. Through this, the accumulation of the foreign substances can be minimized by directly suctioning the foreign substances generated during notching through the slit (S). Therefore, it is possible to improve the loss caused by the non-operation of the equipment due to the replacement of the jig and the problem of defects occurring due to damage to the surface of the electrode sheet due to foreign substances.

In addition, the electrode sheet notching method according to one embodiment of the present invention may further comprise a step of suctioning the electrode sheet 10 with the first roller 110 and the second roller 120. Through this, each of the first roller 110 and the second roller 120 may contact and convey the electrode sheet 10. In addition, the second roller 120 may contact and convey the the scrap 10s generated during processing the electrode sheet 10, thereby stably discharging to the retrieve unit 400.

In addition, the electrode sheet notching method according to one embodiment of the present invention may further comprise a step of recovering scrap 10s generated when processing the electrode sheet 10. At this time, the scrap (10s) can be recovered using a vacuum, but the present invention is not limited thereto.

However, of course, the electrode sheet notching method according to one embodiment of the present invention may further include a step not described in this specification. In addition, some of the above-described steps may be omitted or the order of each step may be changed. In some cases, two or more of the above steps may be performed simultaneously. In addition, the content described in the electrode sheet notching apparatus according to one embodiment of the present invention can be applied to the electrode sheet notching method according to an embodiment of the present invention in substantially the same way.

In this specification, the order of the first, second, etc. is for distinguishing the components from each other, and does not mean a priority order between the components or an absolute order. A first element in one part of this specification may be referred to as a second element in another part of this specification.

The terms and expressions herein should be interpreted broadly and should not be construed in a limiting sense. In this specification, the expression 'comprising' does not exclude the presence or addition of one or more other components other than the stated components. In this specification, expression in the singular comprises the plural unless explicitly excluded by context. specification, expression in the singular comprises the plural unless explicitly excluded by context.

## Claims

1. An electrode sheet (10) notching apparatus, comprising:
a conveying unit (100) including a first roller (110) and a second roller (120), the conveying unit (100) being configured to convey an electrode sheet (10);
a jig unit (200) including a jig (210), wherein the jig unit (200) further comprises a jig base (220) for fixing and supporting the jig (210), the jig (210) being configured to support the electrode sheet (10);
a processing unit (300) which faces the jig unit (200) with the electrode sheet (10) interposed therebetween, including a laser, the laser being configured to process the electrode sheet (10);
wherein the jig (210) has a slit (S) positioned on a first surface of the jig (210) facing the electrode sheet (10), the jig (210) being configured to move on a plane coplanar with a first surface of the electrode sheet (10), the first surface of the electrode sheet (10) facing the jig (210), wherein the slit (S) is configured to allow passage of a laser beam; and
wherein the jig (210) is disposed between the first roller (110) and the second roller (120),
wherein each of the first roller (110) and the second roller (120) is a suction roller wherein each of the first roller (110) and the second roller (120) presents a vacuum hole formed on the surface of the roller (110, 120) and a vacuum pipe connected to the vacuum hole, the suction roller being configured to suction the electrode sheet (10),
wherein a rotation speed of each of the first roller (110) and the second roller (120) is configured to be individually controlled, and
wherein a suction force of each of the first roller (110) and the second roller (120) is configured to be individually controlled.

2. The electrode sheet (10) notching apparatus according to claim 1, wherein the jig (210) comprises a support portion (211), the support portion (211) being in contact with the electrode sheet (10) and a suction portion (212), the suction portion (212) being configured to suction foreign substances generated when processing the electrode sheet (10), wherein the suction portion (212) is configured to suction the foreign substances through the slit(S).

3. The electrode sheet (10) notching apparatus according to claim 1, wherein the jig (210) is configured to move in a direction parallel to a conveying direction of the electrode sheet (10), the conveying direction being parallel to an axis along which the electrode sheet (10) is configured to move between the first roller (110) and the second roller (120).

4. The electrode sheet (10) notching apparatus according to claim 3, wherein the direction parallel to the conveying direction of the electrode sheet (10) comprises both a forward direction, the forward direction being parallel to the conveying direction of the electrode sheet (10) and extending toward the second roller (120) and a backward direction, the backward direction being parallel to the conveying direction of the electrode sheet and extending toward the first roller (110).

5. The electrode sheet (10) notching apparatus according to claim 1, wherein the slit (S) is an opening positioned in the jig (210), the opening being configured to extend along an inner circumferential surface of the jig (210) from a first side of the jig (210) to a second side of the jig (210), wherein the first side of the jig (210) faces the electrode sheet (10) and the second side of the jig (210) is spaced apart from the first side of the jig (210) in a dimension orthogonal to a conveying direction of the electrode sheet (10).

6. The electrode sheet (10) notching apparatus according to claim 1, further comprising a retrieve unit (400) that is configured to retrieve a scrap (10s) generated when processing the electrode sheet (10) in the form of a housing for recovering the falling scrap (10s) through an open region or in the form of a roller for recovering the scrap (10s) by winding the scrap (10s).

7. The electrode sheet (10) notching apparatus according to claim 6, wherein the electrode sheet (10) is configured to be conveyed from the first roller (110) to the second roller (120) and the second roller (120) is configured to convey the scrap (10s) to the retrieve unit (400).

8. An electrode sheet (10) notching method using the apparatus of claim 1 comprising:
rotating a first roller (110) and a second roller (120) to convey an electrode sheet (10);
moving a jig (210) having a slit (S) positioned on a first surface of the jig (210), the first surface of the jig (210) facing the electrode sheet (10) and extending along a plane coplanar with a first surface of the electrode sheet (10) so that a scheduled region of the electrode sheet (10) to be processed and the slit (S) overlap; and
processing the electrode sheet (10) by a laser.

9. The electrode sheet (10) notching method according to claim 8, further comprising suctioning foreign substances generated when processing the electrode sheet (10) through the slit (S).

10. The electrode sheet (10) notching method according to claim 8, further comprising suctioning the electrode sheet (10) with the first roller (110) and the second roller (120).

11. The electrode sheet (10) notching method according to claim 8, further comprising retrieving the scrap (10s) generated when processing the electrode sheet (10).

## Patentansprüche

1. Vorrichtung zum Einkerben einer Elektrodenbahn (10), umfassend:
• eine Fördereinheit (100) mit einer ersten Walze (110) und einer zweiten Walze (120), wobei die Fördereinheit (100) dazu konfiguriert ist, eine Elektrodenbahn (10) zu fördern;
• eine Schabloneneinheit (200) mit einer Schablone (210), wobei die Schabloneneinheit (200) ferner eine Schablonenbasis (220) zum Befestigen und Stützen der Schablone (210) umfasst, wobei die Schablone (210) dazu konfiguriert ist, die Elektrodenbahn (10) zu stützen;
• eine Bearbeitungseinheit (300), die der Schabloneneinheit (200) zugewandt ist, wobei die Elektrodenbahn (10) dazwischen angeordnet ist, einschließlich eines Lasers, wobei der Laser dazu konfiguriert ist, die Elektrodenbahn (10) zu bearbeiten;
• wobei die Schablone (210) einen Schlitz (S) aufweist, der auf einer ersten Oberfläche der Schablone (210) positioniert ist, die der Elektrodenbahn (10) zugewandt ist, wobei die Schablone (210) dazu konfiguriert ist, sich auf einer Ebene zu bewegen, die koplanar mit einer ersten Oberfläche der Elektrodenbahn (10) ist, wobei die erste Oberfläche der Elektrodenbahn (10) der Schablone (210) zugewandt ist, wobei der Schlitz (S) dazu konfiguriert ist, den Durchgang eines Laserstrahls zu ermöglichen; und
• wobei die Schablone (210) zwischen der ersten Walze (110) und der zweiten Walze (120) angeordnet ist,
• wobei sowohl die erste Walze (110) als auch die zweite Walze (120) eine Saugwalze ist, wobei sowohl die erste Walze (110) als auch die zweite Walze (120) eine auf der Oberfläche der Walze (110, 120) ausgebildete Vakuumöffnung und ein mit der Vakuumöffnung verbundenes Vakuumrohr aufweist, wobei die Saugwalze dazu konfiguriert ist, die Elektrodenbahn (10) anzusaugen,
• wobei eine Drehzahl sowohl der ersten Walze (110) als auch der zweiten Walze (120) dazu konfiguriert ist, individuell gesteuert zu werden, und
• wobei eine Saugkraft sowohl der ersten Walze (110) als auch der zweiten Walze (120) dazu konfiguriert ist, individuell gesteuert zu werden.

2. Vorrichtung zum Einkerben einer Elektrodenbahn (10) nach Anspruch 1, wobei die Schablone (210) einen Stützabschnitt (211), wobei der Stützabschnitt (211) mit der Elektrodenbahn (10) in Kontakt steht, und einen Saugabschnitt (212) umfasst, wobei der Saugabschnitt (212) dazu konfiguriert ist, bei der Bearbeitung der Elektrodenbahn (10) erzeugte Fremdstoffe abzusaugen, wobei der Saugabschnitt (212) dazu konfiguriert ist, die Fremdstoffe durch den Schlitz (S) abzusaugen.

3. Vorrichtung zum Einkerben einer Elektrodenbahn (10) nach Anspruch 1, wobei die Schablone (210) dazu konfiguriert ist, sich in einer Richtung parallel zu einer Förderrichtung der Elektrodenbahn (10) zu bewegen, wobei die Förderrichtung parallel zu einer Achse ist, entlang derer die Elektrodenbahn (10) dazu konfiguriert ist, sich zwischen der ersten Walze (110) und der zweiten Walze (120) zu bewegen.

4. Vorrichtung zum Einkerben einer Elektrodenbahn (10) nach Anspruch 3, wobei die Richtung parallel zu der Förderrichtung der Elektrodenbahn (10) sowohl eine Vorwärtsrichtung, wobei die Vorwärtsrichtung parallel zu der Förderrichtung der Elektrodenbahn (10) ist und sich in Richtung der zweiten Walze (120) erstreckt, als auch eine Rückwärtsrichtung umfasst, wobei die Rückwärtsrichtung parallel zu der Förderrichtung der Elektrodenbahn (10) ist und sich in Richtung der ersten Walze (110) erstreckt.

5. Vorrichtung zum Einkerben einer Elektrodenbahn (10) nach Anspruch 1, wobei der Schlitz (S) eine in der Schablone (210) positionierte Öffnung ist, wobei die Öffnung dazu konfiguriert ist, sich entlang einer inneren Umfangsfläche der Schablone (210) von einer ersten Seite der Schablone (210) zu einer zweiten Seite der Schablone (210) zu erstrecken, wobei die erste Seite der Schablone (210) der Elektrodenbahn (10) zugewandt ist und die zweite Seite der Schablone (210) von der ersten Seite der Schablone (210) in einer Dimension orthogonal zu einer Förderrichtung der Elektrodenbahn (10) beabstandet ist.

6. Vorrichtung zum Einkerben einer Elektrodenbahn (10) nach Anspruch 1, ferner umfassend eine Rückgewinnungseinheit (400), die dazu konfiguriert ist, einen bei der Bearbeitung der Elektrodenbahn (10) erzeugten Verschnitt (10s) in Form eines Gehäuses zum Auffangen des herabfallenden Verschnitts (10s) durch einen offenen Bereich oder in Form einer Walze zum Auffangen des Verschnitts (10s) durch Aufwickeln des Verschnitts (10s) zurückzugewinnen.

7. Vorrichtung zum Einkerben einer Elektrodenbahn (10) nach Anspruch 6, wobei die Elektrodenbahn (10) dazu konfiguriert ist, von der ersten Walze (110) zur zweiten Walze (120) gefördert zu werden, und die zweite Walze (120) dazu konfiguriert ist, den Verschnitt (10s) zur Rückgewinnungseinheit (400) zu fördern.

8. Verfahren zum Einkerben einer Elektrodenbahn (10) unter Verwendung der Vorrichtung nach Anspruch 1, umfassend:
• Drehen einer ersten Walze (110) und einer zweiten Walze (120), um eine Elektrodenbahn (10) zu fördern;
• Bewegen einer Schablone (210) mit einem Schlitz (S), der auf einer ersten Oberfläche der Schablone (210) positioniert ist, wobei die erste Oberfläche der Schablone (210) der Elektrodenbahn (10) zugewandt ist und sich entlang einer Ebene erstreckt, die koplanar mit einer ersten Oberfläche der Elektrodenbahn (10) ist, so dass sich ein geplanter Bereich der zu bearbeitenden Elektrodenbahn (10) und der Schlitz (S) überlappen; und
• Bearbeiten der Elektrodenbahn (10) durch einen Laser.

9. Verfahren zum Einkerben einer Elektrodenbahn (10) nach Anspruch 8, ferner umfassend das Absaugen von bei der Bearbeitung der Elektrodenbahn (10) erzeugten Fremdstoffen durch den Schlitz (S).

10. Verfahren zum Einkerben einer Elektrodenbahn (10) nach Anspruch 8, ferner umfassend das Ansaugen der Elektrodenbahn (10) mit der ersten Walze (110) und der zweiten Walze (120).

11. Verfahren zum Einkerben einer Elektrodenbahn (10) nach Anspruch 8, ferner umfassend das Zurückgewinnen des bei der Bearbeitung der Elektrodenbahn (10) erzeugten Verschnitts (10s).

## Revendications

1. Appareil d'encochage de feuille d'électrode (10), comprenant :
• une unité de transport (100) comprenant un premier rouleau (110) et un second rouleau (120), l'unité de transport (100) étant configurée pour transporter une feuille d'électrode (10) ;
• une unité de gabarit (200) comprenant un gabarit (210), dans lequel l'unité de gabarit (200) comprend en outre une base de gabarit (220) pour fixer et soutenir le gabarit (210), le gabarit (210) étant configuré pour soutenir la feuille d'électrode (10) ;
• une unité de traitement (300) qui fait face à l'unité de gabarit (200) avec la feuille d'électrode (10) interposée entre elles, comprenant un laser, le laser étant configuré pour traiter la feuille d'électrode (10) ;
• dans lequel le gabarit (210) présente une fente (S) positionnée sur une première surface du gabarit (210) faisant face à la feuille d'électrode (10), le gabarit (210) étant configuré pour se déplacer dans un plan coplanaire avec une première surface de la feuille d'électrode (10), la première surface de la feuille d'électrode (10) faisant face au gabarit (210), dans lequel la fente (S) est configurée pour permettre le passage d'un faisceau laser ; et
• dans lequel le gabarit (210) est disposé entre le premier rouleau (110) et le second rouleau (120),
• dans lequel chacun du premier rouleau (110) et du second rouleau (120) est un rouleau d'aspiration, dans lequel chacun du premier rouleau (110) et du second rouleau (120) présente un orifice de vide formé sur la surface du rouleau (110, 120) et un tuyau de vide raccordé à l'orifice de vide, le rouleau d'aspiration étant configuré pour aspirer la feuille d'électrode (10),
• dans lequel une vitesse de rotation de chacun du premier rouleau (110) et du second rouleau (120) est configurée pour être commandée individuellement, et
• dans lequel une force d'aspiration de chacun du premier rouleau (110) et du second rouleau (120) est configurée pour être commandée individuellement.

2. Appareil d'encochage de feuille d'électrode (10) selon la revendication 1, dans lequel le gabarit (210) comprend une partie de support (211), la partie de support (211) étant en contact avec la feuille d'électrode (10) et une partie d'aspiration (212), la partie d'aspiration (212) étant configurée pour aspirer des substances étrangères générées lors du traitement de la feuille d'électrode (10), dans lequel la partie d'aspiration (212) est configurée pour aspirer les substances étrangères à travers la fente (S).

3. Appareil d'encochage de feuille d'électrode (10) selon la revendication 1, dans lequel le gabarit (210) est configuré pour se déplacer dans une direction parallèle à une direction de transport de la feuille d'électrode (10), la direction de transport étant parallèle à un axe le long duquel la feuille d'électrode (10) est configurée pour se déplacer entre le premier rouleau (110) et le second rouleau (120).

4. Appareil d'encochage de feuille d'électrode (10) selon la revendication 3, dans lequel la direction parallèle à la direction de transport de la feuille d'électrode (10) comprend à la fois une direction vers l'avant, la direction vers l'avant étant parallèle à la direction de transport de la feuille d'électrode (10) et s'étendant vers le second rouleau (120), et une direction vers l'arrière, la direction vers l'arrière étant parallèle à la direction de transport de la feuille d'électrode (10) et s'étendant vers le premier rouleau (110).

5. Appareil d'encochage de feuille d'électrode (10) selon la revendication 1, dans lequel la fente (S) est une ouverture positionnée dans le gabarit (210), l'ouverture étant configurée pour s'étendre le long d'une surface circonférentielle interne du gabarit (210) depuis un premier côté du gabarit (210) jusqu'à un second côté du gabarit (210), dans lequel le premier côté du gabarit (210) fait face à la feuille d'électrode (10) et le second côté du gabarit (210) est espacé du premier côté du gabarit (210) dans une dimension orthogonale à une direction de transport de la feuille d'électrode (10).

6. Appareil d'encochage de feuille d'électrode (10) selon la revendication 1, comprenant en outre une unité de récupération (400) qui est configurée pour récupérer un déchet (10s) généré lors du traitement de la feuille d'électrode (10) sous la forme d'un boîtier pour collecter le déchet (10s) tombant à travers une région ouverte ou sous la forme d'un rouleau pour collecter le déchet (10s) par enroulement du déchet (10s).

7. Appareil d'encochage de feuille d'électrode (10) selon la revendication 6, dans lequel la feuille d'électrode (10) est configurée pour être transportée du premier rouleau (110) au second rouleau (120) et le second rouleau (120) est configuré pour transporter le déchet (10s) vers l'unité de récupération (400).

8. Procédé d'encochage de feuille d'électrode (10) utilisant l'appareil selon la revendication 1, comprenant :
• la rotation d'un premier rouleau (110) et d'un second rouleau (120) pour transporter une feuille d'électrode (10) ;
• le déplacement d'un gabarit (210) ayant une fente (S) positionnée sur une première surface du gabarit (210), la première surface du gabarit (210) faisant face à la feuille d'électrode (10) et s'étendant le long d'un plan coplanaire avec une première surface de la feuille d'électrode (10) de sorte qu'une zone programmée de la feuille d'électrode (10) à traiter et la fente (S) se chevauchent ; et
• le traitement de la feuille d'électrode (10) par un laser.

9. Procédé d'encochage de feuille d'électrode (10) selon la revendication 8, comprenant en outre l'aspiration de substances étrangères générées lors du traitement de la feuille d'électrode (10) à travers la fente (S).

10. Procédé d'encochage de feuille d'électrode (10) selon la revendication 8, comprenant en outre l'aspiration de la feuille d'électrode (10) avec le premier rouleau (110) et le second rouleau (120).

11. Procédé d'encochage de feuille d'électrode (10) selon la revendication 8, comprenant en outre la récupération du déchet (10s) généré lors du traitement de la feuille d'électrode (10).
